## Europäisches Patentamt
## European Patent Office
## Office européen des brevets

(19)

(11) Veröffentlichungsnummer: **0 239 714**
**B1**

(12) **EUROPÄISCHE PATENTSCHRIFT**

(45) Veröffentlichungstag der Patentschrift:
28.06.89

(51) Int. Cl.⁴: **B23B 49/04**

(21) Anmeldenummer: 86890094.5

(22) Anmeldetag: 04.04.86

(54) Endenbearbeitungsmaschine.

(43) Veröffentlichungstag der Anmeldung:
07.10.87 Patentblatt 87/41

(45) Bekanntmachung des Hinweises auf die Patenterteilung:
28.06.89 Patentblatt 89/26

(84) Benannte Vertragsstaaten:
AT DE FR GB IT

(56) Entgegenhaltungen:
DE-A- 2 551 250
DE-B- 2 209 622
US-A- 3 110 082

PATENT ABSTRACTS OF JAPAN, Band 7,
Nr. 165 (M-230)[1310], 20. Juli 1983
TECHNISCHE RUNDSCHAU, Band 64, Nr. 21, 19.
Mai 1972, Seiten 13, 17, 19, Bern, CH; H. PÖTSCHKE
"Maschinen für die Endenbearbeitung"

(73) Patentinhaber: GFM Gesellschaft für Fertigungstechnik
und Maschinenbau Gesellschaft m.b.H.,
Ennserstrasse 14, A-4403 Steyr(AT)

(72) Erfinder: Blaimschein, Gottfried, Dipl.-Ing.,
Arnhalmweg 33, A-4407 Steyr(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz(AT)

## Beschreibung

Die Erfindung bezieht sich auf eine Endenbearbeitungsmaschine, bestehend aus einem Maschinenbett mit einer Werkstückspanneinrichtung und wenigstens einem relative zur Werkstückspanneinrichtung in Werkstückachsrichtung verschiebbar geführten Spindelaggregat, vgl. US-A-3 110 082.

Endenbearbeitungsmaschinen dienen zum Zentrieren, Bohren, Ablängen, Profilieren, Fasen u. dgl. Abspanen, insbesondere von wellen- oder rohrförmigen Werkstückenden, wobei die Werkstückspanneinrichtung das Werkstück mit Abstand von dem zu bearbeitenden Ende spannt und dieses Ende zur gewünschten Bearbeitung freigibt. Di eigentliche Bearbeitung erfolgt dann bisher ausschließlich über die Spindelaggregate, die in verschiedenen Ausführungen bekannt ind und als Ein- oder Mehrspindelaggregate eingesetzt werden, wobei es eine Vielzahl von speziellen, auf bestimmte einfache oder kombinierte Arbeitsschritte abgestimmte Werkzeugköpfe für diese Spindelaggregate gibt. Trotz der großen Auswahlmöglichkeiten für den Einsatz von Werkzeugköpfen und Werkzeugen bleibt aber diese Endenbearbeitung unbefriedigend, da, abgesehen vom erforderlichen Aufwand, die Bearbeitungszeit nur auf Kosten der Bearbeitungsqualität und der Werkzeug-Standzeit herabzusetzen ist und daher die steigenden Anforderungen an eine Verkürzung der Bearbeitungszeit, eine Verbesserung der Bearbeitungsqualität und eine Erhöhung der Standzeit eines unvermeidbaren Kompromisses bedürfen. Die Dimensionierung der Werkzeugköpfe muß nämlich zwangsweise auf die jeweiligen Werkstücke abgestimmt sein und zur Oberflächenbearbeitung müssen die Schnittkreise der eingesetzten Schneidwerkzeuge innerhalb eines vom Werkstückdurchmesser abhängigen, recht kleinen Durchmessers liegen, so daß sich beim Schneiden mit mehreren radial gegeneinander versetzt angeordneten Werkzeugen, wie sie für eine kombinierte Bearbeitung notwendig sind, sehr unterschiedliche Schnittgeschwindigkeiten ergeben, die wiederum zu einer Beeinträchtigung der Bearbeitungsqualität und der Standzeit führen. Wird hingegen ein mit nur einem Schneidwerkzeug bestückter Werkzeugkopf verwendet, lassen sich durch eine entsprechende Beeinflussung der Schnittbedingungen für dieses Werkzeug Bearbeitungsqualität und Standzeit verbessern, es sind allerdings mehrer Bearbeitungsschritte mit Werkzeug-, Werkzeugkopf- oder Spindelwechsel notwendig, was wiederum einer Bearbeitungszeitverkürzung entgegensteht.

Der Erfindung liegt daher die Aufgabe zugrunde, diese Mängel zu beseitigen und eine Endenbearbeitungsmaschine der eingangs geschilderten Art zu schaffen, die bei hoher Werkzeug-Standzeit und bester Bearbeitungsqualität ein rationelles Endenbearbeiten innerhalb kürzester Bearbeitungzeit erhaubt.

Die Erfindung löst diese Aufgabe dadurch, daß das Maschinenbett im Bereich zwischen Werkstückspanneinrichtung und Spindelaggregat eine relativ zum Spindelaggregat in Werkstückachsrichtung verschiebbare Fräseinheit aufnimmt, die mit einem ringförmigen, innenschneidenden, in einem quer zur Werkstückachsrichtung bewegbaren Werkzeugschlitten dreh- und antreibbar gelagerten Messerkopf bestückt ist. Dieser Innenfräser kann zum Ablängen, zum Planen, zum Profilieren u. dgl. eben von einem Innenfräser ausführbaren Bearbeitungen herangezogen werden und bietet auch für die Endenbearbeitung alle ihm eigenen Vorzüge, wie vor allem Schnelligkeit und Qualität der Bearbeitung sowie lange Messerkopf-Standzeiten. Da der Durchmesser des Innenfräsers vom Werkstückdurchmesser weitgehend unabhängig ist und ein Mehrfaches dieses Durchmessers beträgt, kommt es auch bei radial gegeneinander versetzten Schneidplättchen für eine gewünschte kombinierte Endenbearbeitung, bedingt durch den gegenüber dem Radius verhältnismäßig kleinen Plättchenabstand, nur zu kleinen Unterschieden der Umgangs- bzw. Schnittgeschwindigkeiten, die weder die Bearbeitungsqualität noch die Standzeit beeinträchtigen. Mit dem Innenfräser kann daher in einem Arbeitsgang die gewünschte Poriflierung und Oberflächenbearbeitung der Enden durchgeführt werden, wobei es gleichzeitig möglich ist, das Spindelaggregat in geeigneter Weise, insbesondere als einfache Bohrmaschine, einzusetzen, was ein gemeinsames Durchmesserbearbeiten und Bohren der Werkstücke ohne jeden Kompromiß hinsichtlich Qualität, Bearbeitungszeit und Standzeit gewährleistet.

In der Zeichnung ist der Erfindungsgegenstand beispielsweise veranschaulicht, und zwar zeigen

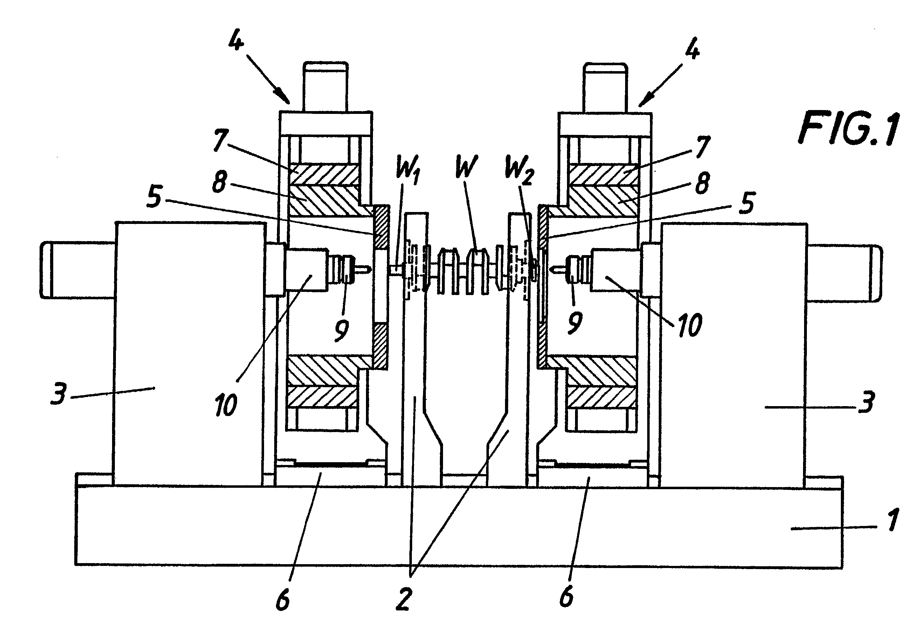

Fig. 1 eine erfindungsgemäße Endenbearbeitungsmaschine in teilgeschnittener Vorderansicht und die

Fig. 2 und 3 die Arbeitsweise dieser Maschine an Hand zweier schematischer Arbeitsschritte.

Auf einem Maschinenbett 1 sitzt eine aus zwei Spannstöcken 2 bestehende Werkstückspanneinrichtung, die ein zu bearbeitendes Werkstück W mit Abstand von den Enden spannt. Um beide Werkstückenden W₁, W₂ gleichzeitig bearbeiten zu können, gibt es zwei Spindelaggregate 3, die an den einander abgekehrten Seiten der Werkstückspanneinrichtung 2 in Werkstückachsrichtung verschiebbar am Maschinenbett 1 geführt sind. Außerdem nimmt das Maschinenbett 1 jeweils im Bereich zwischen der Werkstückspanneinrichtung 2 und einem Spindelaggregat 3 eine Fräseinheit 4 mit einem ringförmigen, innenschneidenden Messerkopf 5 auf, welche Fräseinheiten 4 über einen Längsschlitten 6 ebenfalls in Werkstückachsrichtung verschiebbar geführt sind und einen quer zur Werkstückachsrichtung bewegabren Werkzeugschlitten 7 für den Messerkopf 5 aufweisen. Der Messerkopf 5 ist dabei an der der Werkstückspanneinrichtung 2 zugekehrten Stirnseite einer im Werkzeugschlitten 7 dreh- una antreibbar gelagerten Werkzeugtrommel 8 befestigt, in die auch das benachbarte Spindelaggregat 3 mit einem einen Werkzeugkopf 9 tragenden vorkragenden Halsansatz 10 einfahrbar ist.

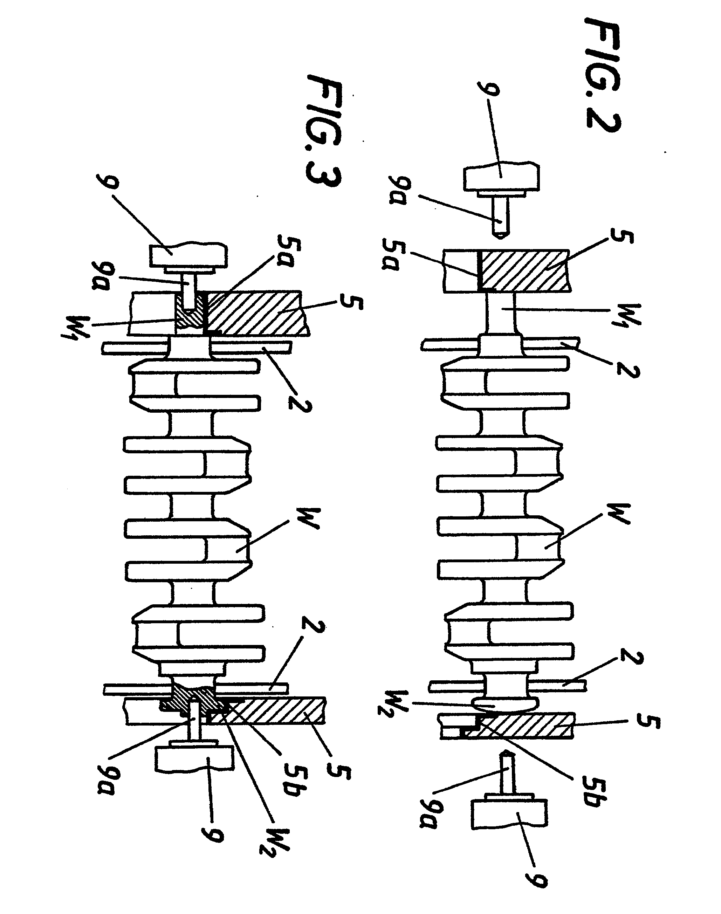

Wie in den Fig. 2 und 3 angedeutet, kann das in den Spannstöcken 2 gespannte Werkstück W, beispielsweise eine Kurbelwelle, an seinen freien Ende $W_1$, $W_2$, dem Schaft- und dem Flanschende rationell bearbeitet werden, wenn im Werkzeugkopf 9 der Spindelaggregate 3 jeweils ein Bohrwerkzeug 9a eingesetzt ist und die Fräseinheiten 4 mit Messerköpfen 5 bestückt werden, die sich durch entsprechend angeordnete Schneiden 5a einerseits und 5b andererseits nicht nur zum Bearbeiten der Stirnflächen, sondern auch zur Oberflächenbearbeitung des gesamten Schaft- bzw. Flanschteiles der Enden $W_1$, $W_2$ eignen. Dadurch ist es möglich, zuerst bei zurückgezogenen Bohrwerkzeugen 9a mit den Messerköpfen 5 das Werkstück W genau abzulängen (Fig. 2) und in einem anschließenden Bearbeitungsschritt nach dem dazu erforderlichen axialen Versetzen der Messerköpfe 5 gleichzeitig sämtliche Außenflächen der Werkstückenden $W_1$, $W_2$ gemeinsam zu bearbeiten und zusätzlich noch die Axialbohrungen zu setzen (Fig. 3). Es kommt zu einer schnellen Endenbearbeitung mit hoher Bearbeitungsqualität und langen Werkzeug-Standzeiten.

## Patentansprüche

Endenbearbeitungsmaschine, bestehend aus einem Maschinenbett (1) mit einer Werkstückspanneinrichtung (2) und wenigstens einem relativ zur Werkstückspanneinrichtung (2) in Werkstückachsrichtung verschiebbar geführten Werkzeugspindelaggregat (3), dadurch gekennzeichnet, daß das Maschinenbett (1) im Bereich zwischen Werkstückspanneinrichtung (2) und Spindelaggregat (3) eine relativ zum Spindelaggregat (3) in Werkstückachsrichtung verschiebbare Fräseinheit (4) aufnimmt, die mit einem ringförmigen, innenschneidenden, in einem quer zur Werkstückachsrichtung bewegbaren Werkzeugschlitten (7) dreh- und antreibbar gelagerten Messerkopf (5) bestückt ist.

## Claims

An end-machining machine consisting of a machine bed (1), which is provided with workpiece-fixing means (2) and at least on tool spindle unit (3), which is slidably guided relative to the workpiece-fixing means (2) in the axial direction of the workpiece, characterized in that the machine bed (1) revives in the region between the workpiece-fixing means (2) and the spindle unit (3) a milling unit (4), which is displaceable relative to the spindle unit (3) in the axial direction of the workpiece and is provided with an internally cutting, annular inserted-tooth cutter (5), which is rotatably mounted and adapted to be driven in a tool carriage (7), which is movable transversely to the axial direction of the workpiece.

## Revendications

Machine d'usinage de finition, se composant d'un banc (1) de machine avec un dispositif (2) de serrage de pièce à usiner et au moins un groupe (3) de broche porte-outil qui est guidé pour coulisser dans le sens axial de la pièce à usiner par rapport au dispositif (2) de serrage de la pièce à usiner, caractérisée par le fait que la banc (1) de la machine supporte, dans la zone entre dispositif (2) de serrage de la pièce à usiner et groupe (3) de broche, une unité de fraisage (4) qui peut être déplacé dans le sens axial de la pièce à usiner par rapport au groupe (3) de broche et qui est équipée d'une tête (5) porte-lames de forme annulaire, prévue pour une taille intérieure et montée de manière à pouvoir tourner et être entraînée dans un coulisseau (7) porte-outil qui peut être déplacé dans le sens transversal à l'axe de la pièce à usiner.

*FIG.1*

EP 0 239 714 B1

*FIG.2*

*FIG.3*